# EUROPEAN PATENT SPECIFICATION

(11) **EP 3 281 885 B1**
(45) Date of publication and mention of the grant of the patent: **09.06.2021**
(21) Application number: 15888504.6
(22) Date of filing: 09.04.2015
(51) Int. Cl.: B65D 88/12, B60P 7/13, B65D 90/00

(54) **CONTAINER FIXING DEVICE**
BEHÄLTERBEFESTIGUNGSVORRICHTUNG
DISPOSITIF DE FIXATION DE CONTENEURS

(43) Date of publication of application: 14.02.2018
(73) Proprietor: Minato Seiki Iron Works Co., Ltd., Takatsuki City, Osaka 569-0832 (JP)
(72) Inventor: TAKAGUCHI Hiroyuki, Nagasaki 851-2121 (JP)
(74) Representative: Grünecker Patent- und Rechtsanwälte PartG mbB
(86) International application number: PCT/JP2015/061150
(87) International publication number: WO 2016/163012

(56) References cited:
- JP-A- 2007 145 334
- JP-A- 2007 168 875
- JP-A- 2010 070 263
- JP-U- S62 167 792
- US-A1- 2010 303 573
- US-A1- 2011 197 401

## Description

### TECHNICAL FIELD

The present invention relates to container-securing devices for fixing containers which are stacked one another, and/or fixing containers onto a cargo bed of transportation vehicles such as railroad freighters and container trailers.

### BACKGROUND ART

Patent Literature 1 discloses a container-securing device of a so called twist-lock type. The container-securing device includes: a flange for disposition between two corner castings of stacked containers; an upper support pillar and a lower support pillar protruding from the flange; an upper cone provided in the upper support pillar for engagement with a groove hole in the upper corner casting; and a lower cone provided in the lower support pillar for engagement with a groove hole in the lower corner casting. The lower cone includes a fixed protrusion, and a movable protrusion (latch) which is provided on the side away from the fixed protrusion. The movable protrusion is inserted into a groove hole of the corner casting automatically by an elastic force of an elastic member.

Patent Literature 2 discloses another container-securing device to fix containers with each other. The device is disposed between an upper and a lower containers stacked in multiple tiers in a container yard or in a container ship for example. This container-securing device has a main body, a shaft, an upper fitting, a lower fitting, a handling member, etc. The main body is separable into two halves and the two are bolted together. The shaft is supported rotatably by the main body with an axis rod. The upper fitting and the lower fitting are integrally connected to an upper end and to a lower end of the shaft respectively. The handling member is for pivoting the shaft, the upper fitting and the lower fitting.

Patent Literature 3 discloses a container-securing device which has a locking/unlocking mechanism. The mechanism includes an arc-shaped piece, a cable, and a knob-shaped handle which is disposed at a free end of the cable. As the knob-shaped handle is operated by a worker, the arc-shaped piece is pivoted to lock/unlock a bolt. A container-securing device according to the preamble of independent claim 1 is disclosed in Patent Literature 4.

### CITATION LIST

### PATENT LITERATURE

Patent Literature 1: JP-B No. 4781786 Gazette
Patent Literature 2: WO2009/128284 Gazette
Patent Literature 3: JP-A 2001-513474 Gazette (WO99/07623 Gazette)
Patent Literature 4: US 2011/0197401 A1

### SUMMARY OF INVENTION

### TECHNICAL PROBLEM

However, the container-securing device disclosed in Patent Literature 1 has a problem in that the movable protrusion as part of the cone can move even after the container has been fixed: In case where any of the vertically stacked containers falls and causes the movable protrusion to move, the stack secured by the container-securing devices is no longer secured, and individual containers are untied from others, posing a greater risk of damage than in cases where a plurality of containers maintain a state of being integrally secured with each other. On the other hand, in the container-securing devices disclosed in Patent Literature 2 or Patent Literature 3, the movable cone must be manually operated, i.e., the container-securing device does not lock by a manual operation in the state where the cone is automatically engaged with a slot hole of the corner fitting.

The present invention was made in consideration into the above-described circumstances, with an object of providing a container-securing device capable of preventing the containers from being untied.

### SOLUTION TO PROBLEM

In order to achieve the above-described object, the present invention provides a container-securing device which includes: a flange for placing on an outer side of a groove hole in a corner casting of a container; a support pillar provided in the flange; a fitting portion provided in the support pillar for fitting into the groove hole in the corner casting; a movable protrusion as part of the fitting portion for making a locked state when protruded laterally out of a vertical surface portion of the support pillar; and a stopper for maintaining the locked state of the movable protrusion.

According to the arrangement described above, the locked state in which the movable protrusion protrudes laterally out of the vertical surface portion of the support pillar is maintained since the device includes the stopper which maintains the locked state of the movable protrusion. Hence, it is possible to prevent the container from being untied even in case where the container rolls over.

The movable protrusion is pivotable on a horizontal shaft provided horizontally in the support pillar for being pivoted by an elastic force from a first elastic member to protrude in a lateral direction from the vertical surface portion of the support pillar.

The movable protrusion may be formed with a cutout at a location away from the horizontal shaft. With this arrangement, the stopper has a moving member for moving in a direction parallel to the horizontal shaft; the moving member comes into contact with the movable protrusion to stop pivoting movement of the movable protrusion when moved to a first position, and when moved to a second position, comes in alignment with the cutout to allow pivoting movement of the movable protrusion.

The container-securing device may further include: a second elastic member for urging the moving member toward the second position; a connecting member connected to the moving member; an operation handle connected to the connecting member for moving the moving member to the first position against the urge from the second elastic member; and an engager for retaining the operation handle operated to the first position.

The engager may be formed in the flange.

The flange may be attached to a cargo bed. The arrangement makes it possible to fix a container onto the cargo bed of a transportation vehicle such as a railroad freighter, container trailer, etc. Therefore, even in case where the transportation vehicle rolls over, it is possible to prevent the container from coming off the cargo bed.

The container-securing device may further include a second support pillar provided in the flange surface facing away from the surface where the other support pillar is provided; and a second fitting portion provided in the second support pillar for fitting into a groove hole in another corner casting. The arrangement makes it possible to fix stacked containers with each other in container ships and railroad freighters. Hence, even in case where any of the vertically stacked containers falls off, it is possible to prevent these containers from being untied from others.

### ADVANTAGEOUS EFFECTS OF INVENTION

According to the present invention, even in case where any of vertically stacked containers rolls over, it is possible to prevent these containers from being untied from others. Also, even in case where a railroad freighter, for example, rolls over, it is possible to prevent the container from coming off the cargo bed.

### BRIEF DESCRIPTION OF DRAWINGS

Fig. 1 is an explanatory drawing which shows a container-securing device according to an embodiment of the present invention, a corner casting on a lower surface of an upper container in a stack, and another corner casting on an upper surface of a lower container in the stack.
Fig. 2 is a schematic bottom view of the container-securing device in Fig. 1.
Fig. 3 is a schematic front view of the container-securing device in Fig. 1.
Fig. 4 shows a stopper of the container-securing device in Fig. 1, with Fig. 4A being a plan view and Fig. 4B being a front view.
Fig. 5 is a perspective view of the container-securing device in Fig. 1.
Fig. 6 is another perspective view of the container-securing device in Fig. 1.
Fig. 7 is an explanatory drawing which shows an unlocked state of the container-securing device in Fig. 1.
Fig. 8A is a schematic front view which shows the unlocked state of the container-securing device in Fig. 1; Fig. 8B is a schematic front view which shows a locked state of the container-securing device in Fig. 1.
Fig. 9 is an explanatory drawing which shows a container-securing device according to another embodiment.

### DESCRIPTION OF EMBODIMENTS

Hereinafter, embodiments of the present invention will be described with reference to the attached drawings.

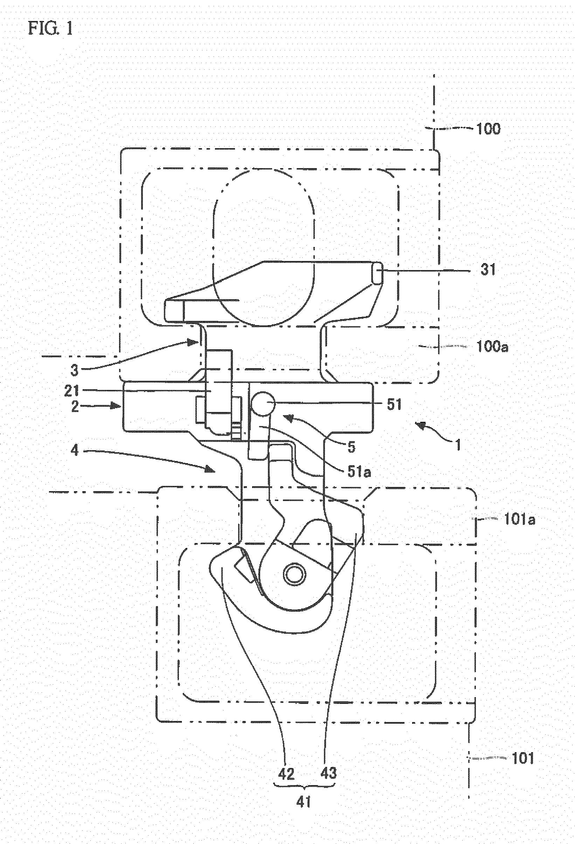

As shown in Fig. 1, an upper container 100 has a corner casting 100a at each corner of its lower surface, whereas a lower container 101 has a corner casting 101a at each corner of its upper surface. A container-securing device 1 is between the corner casting 100a and the corner casting 101a, and fixes the upper container 100 and the lower container 101 with each other.

The container-securing device 1 has a flange 2. The flange 2 comes on an outer side of groove holes of the corner casting 100a, 101a. The flange 2 has an upper support pillar (second support pillar) 3 on its upper surface, and a lower support pillar (support pillar) 4 on its lower surface.

The upper support pillar 3 is provided, on its upper side, with an upper cone (second fitting portion) 31 for fitting into the groove hole of the corner casting 100a on the lower surface of the upper container 100. The lower support pillar 4 is provided, on its lower side, with a lower cone (fitting portion) 41 for fitting into the groove hole of the corner casting 101a on the upper surface of the lower container 101.

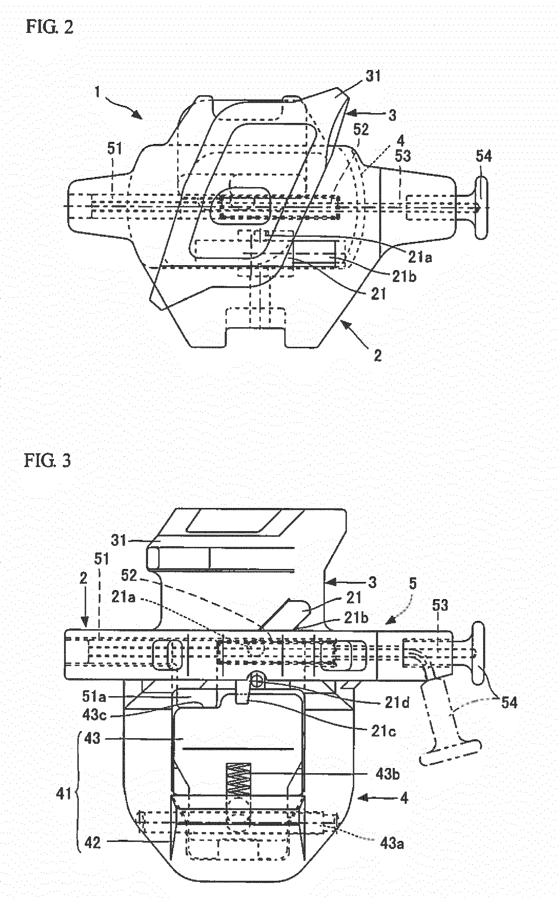

As shown in Fig. 2, the upper support pillar 3 has a cross section similar to a parallelogram, and it is possible to rotate this upper support pillar 3 within a predetermined range in the groove hole of the corner casting 100a. As shown also in Fig. 3, the flange 2 is provided with a fixing lever 21. As an upper portion of the lever is protruded into the groove hole, the upper cone 31 is fixed in the groove hole.

The fixing lever 21 is pivotably supported by a horizontal shaft 21a, and its upper portion is protruded out of the upper surface of the flange 2 by an elastic force of a spring 21b. Also, the fixing lever 21 has a lower portion 21c protruding out of the lower surface of the flange 2. By operating the lower portion 21c, it is possible to retract the upper portion of the fixing lever 21 to the flange 2 side. It should be noted here that the flange 2 is provided with a pin 21d on its lower surface, and as this pin makes contact with the lower portion 21c, pivoting movement of the fixing lever 21 is stopped.

The lower support pillar 4 is formed with two vertical surface portions facing away from each other in parallel to long sides of a long hole which leads to the groove hole. The lower cone 41 has, like in the container-securing device disclosed in Patent Literature 1 (JP-A 2006-143329 Gazette), a fixed protrusion 42 protruding from one of the vertical surface portions, and a movable protrusion (latch) 43 protruding from the other vertical surface portion. The fixed protrusion 42 has its most protruding region, the movable protrusion 43 has its most protruding region, and these two regions are provided at different heights in a vertical position. The movable protrusion 43 has an upper portion formed with a slope surface which makes sliding contact with an edge of the groove hole when pulled for unloading the container. The movable protrusion 43 also has a lower portion formed with a slope surface which makes sliding contact with the edge of the groove hole.

The movable protrusion 43 is pivotable on a horizontal shaft 43a provided horizontally in the lower support pillar 4, and is pivoted by an elastic force from a coil spring (first elastic member) 43b to protrude in a lateral direction from the vertical surface portion of the lower support pillar 4. When the slope surface of the movable protrusion 43 comes in contact with the edge of the groove hole, the movable protrusion 43 is pivoted against the elastic force from the coil spring 43b, and retracted to the lower support pillar 4 side. In other words, the movable protrusion 43 makes a locked state in which it protrudes laterally out of the vertical surface portion of the lower support pillar 4, and an unlocked state in which it is retracted to the lower support pillar 4 side.

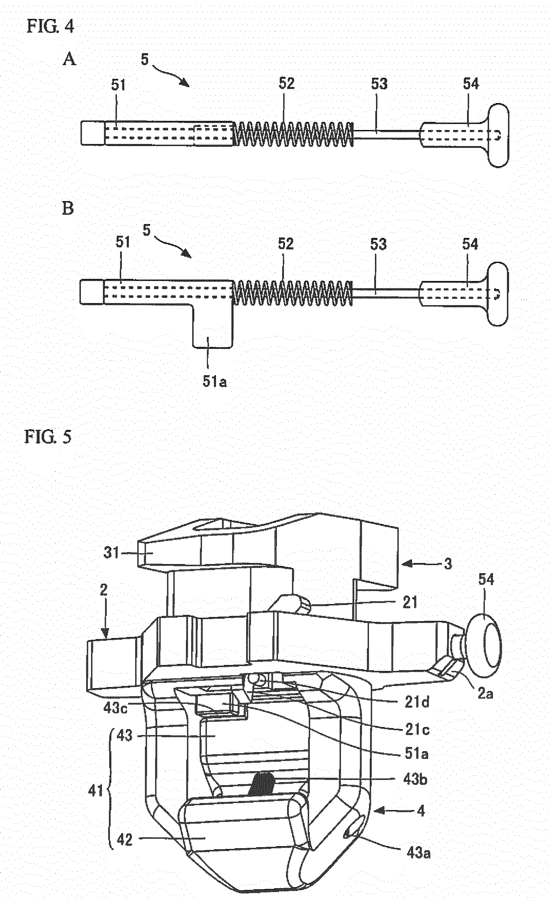

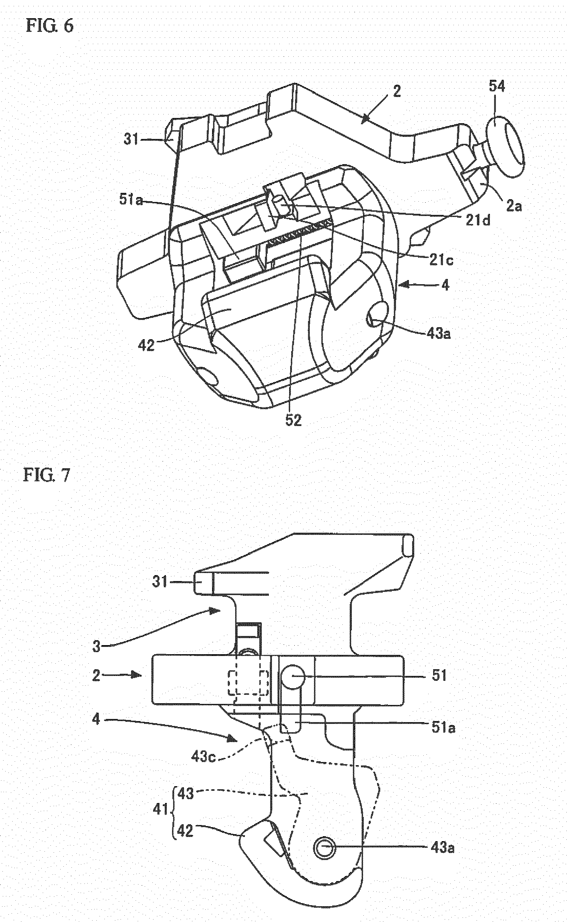

The container-securing device 1 has a stopper 5 which keeps the movable protrusion 43 in the locked state. As shown also in Fig. 4A and Fig. 4B, the stopper 5 has a moving member 51, a coil spring 52 serving as a second elastic member, a wire 53 serving as a connecting member, and an operation handle 54. As also shown in Fig. 5 and Fig. 6, the movable protrusion 43 is formed with a cutout 43c on its end which faces the flange 2.

The moving member 51 has a cylindrical main body, and a stopper piece 51a formed on part of an outer circumference of the main body. As the main body is guided by a guide formed inside the flange 2, the moving member 51 is slid in a direction parallel to the horizontal shaft 43a. This sliding movement allows the stopper piece 51a to be selectively placed at a position where the cutout 43c is formed, and a position where a contact is made with the movable protrusion 43. It should be noted here that an end of the main body in the moving member 51 makes contact with an unillustrated stopping member, so the stopper piece 51a does not slide beyond the place formed with the cutout 43c.

When the moving member 51 is slid to a first position, the stopper piece 51a comes in contact with the movable protrusion 43, thereby preventing the movable protrusion 43 from pivoting. On the other hand, when the moving member 51 is slid to the second position, the stopper piece 51a comes to the place formed with the cutout 43c as shown in Fig. 7, thereby allowing the movable protrusion 43 to pivot.

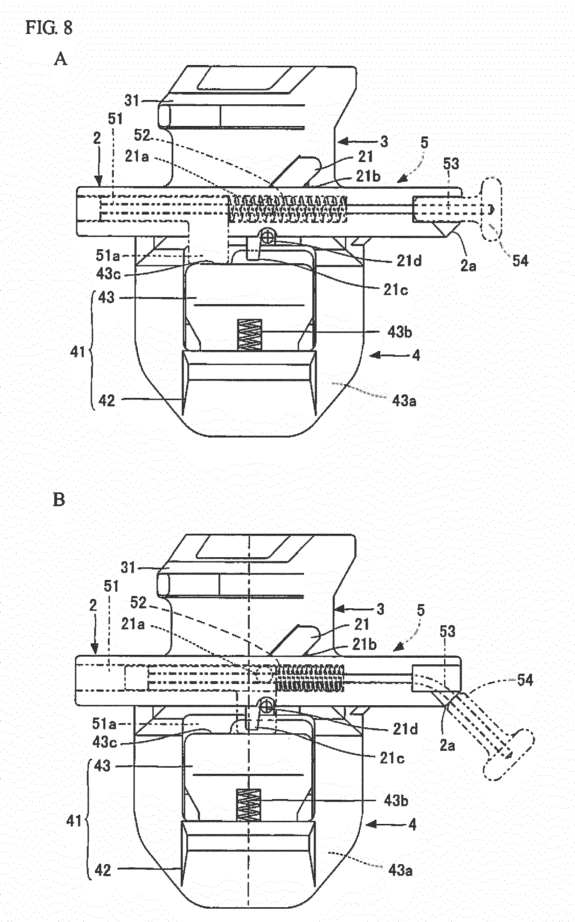

As shown also in Fig. 8A and Fig. 8B, the coil spring 52 is provided inside the flange 2, with one end thereof in contact with a wall of the flange 2 and the other end thereof in contact with an end of the moving member 51, thereby urging the moving member 51 toward the second position to place the stopper piece 51a at the place formed with the cutout 43c. Also, the wire 53 is routed through the coil spring 52, to connect the moving member 51 and the operation handle 54 with each other.

The operation handle 54 is on an outer side of the flange 2. When a worker pulls the operation handle 54 against the urge from the coil spring 52, the moving member 51 slides to the first position. When the worker releases the operation handle 54, a spring force from the coil spring 52 moves the moving member 51 back to the second position.

The operation handle 54 is on a tip of a horizontally protruding extension formed in the flange 2, so that the worker can work on the operation handle 54 between two, mutually stacked containers, on the outermost side thereof as much as possible. Also, the horizontally protruding extension has its tip end formed with a recess which is capable of housing a projection of the operation handle 54. By keeping the projection in the recess, the operation handle 54 is held stably.

The horizontally protruding extension formed in the flange 2 has its tip also formed with an engager 2a for engagement with the operation handle 54 when the moving member 51 is slid to the first position. The engager 2a is provided by a sloped surface formed on a lower side of the tip of the horizontally protruding extension, and is designed to make contact with a tip of the projection of the operation handle 54 when the handle is pulled out of the recess. Since the coil spring 52 provides a constant pull on the tip of the projection against the slope surface, the operation handle 54 is caught by the engager 2a. Of course, the engager 2a is not limited to those having a sloped surface.

As has been described, the container-securing device includes: a flange 2; an upper support pillar 3 which is provided on an upper side of the flange 2; an upper cone 31 for fitting into a groove hole of a corner casting in a lower surface of an upper container; a lower support pillar 4 which is provided on a lower side of the flange 2; a lower cone 41 for fitting into a groove hole of another corner casting in an upper surface of a lower container; a movable protrusion 43 for making a locked state when protruded laterally out of a vertical surface portion of the lower support pillar 4; and a stopper 5 which maintains the locked state of the movable protrusion 43.

Since the device includes the stopper 5 as described, the movable protrusion 43 is kept protruded laterally out of the vertical surface portion of the lower support pillar 4. Hence, even in case where any of the vertically stacked containers falls off, it is possible to prevent these containers from being untied from others. Also, according to the container-securing device 1, it is possible to manually lock the state where the lower cone 41 is automatically engaged with the groove hole of the corner casting.

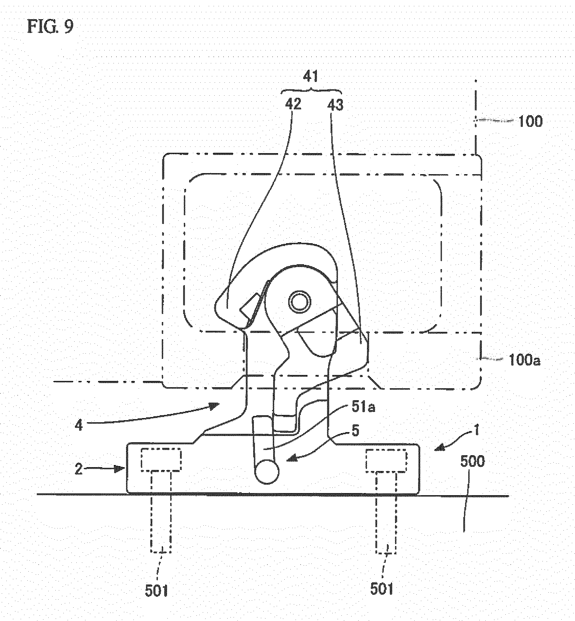

Next, a container-securing device 1 according to another embodiment will be described. This container-securing device 1 does not have the upper support pillar 3, and is utilized as shown in Fig. 9, with the fitting portion (lower cone 41) facing upward and the flange 2 attached to a cargo bed 500 of a trailer for example. Therefore, even in case of a trailer roll-over, it is possible to prevent a container 100 from coming off the cargo bed 500. The container-securing device 1 is attached onto the cargo bed 500 by means of bolts 501, but the invention is not limited by this. The container-securing device 1 may be attached to the cargo bed 500 in a different fashion, e.g., so that the container-securing device 1 may be detachable from/attachable to the cargo bed 500. For example, the container-securing device 1 may be separatably composed of a main body and a socket, so that the socket is bolted or otherwise fixed to the cargo bed 500. Another idea of attaching the container-securing device 1 to the cargo bed 500 in a different way is that the container-securing device 1 is composed of a main body and a housing, and is attached so that the main body can be stored in the housing.

Thus far, embodiments of the present invention have been described with reference to the drawings. However, the present invention is defined by the claims.

### REFERENCE SIGNS LIST

- 1: Container-Securing Device
- 2: Flange
- 2a: Engager
- 3: Upper Support Pillar(Second Support Pillar)
- 31: Upper Cone (Second Fitting Portion)
- 4: Lower Support Pillar(Support Pillar)
- 41: Lower Cone (Fitting Portion)
- 42: Fixed Protrusion
- 43: Movable Protrusion
- 43a: Horizontal Shaft
- 43b: Coil Spring (First Elastic Member)
- 43c: Cutout
- 5: Stopper
- 51: Moving Member
- 52: Coil Spring (Second Elastic Member)
- 53: Wire (Connecting Member)
- 54: Operation Handle

## Claims

1. A container-securing device (1) comprising:
a flange (2) for placing on an outer side of a groove hole in a corner casting (101a) of a container (101);
a support pillar (4) provided in the flange (2);
a fitting portion (41) provided in the support pillar (4) for fitting into the groove hole in the corner casting (101a);
a movable protrusion (43) as part of the fitting portion (41) for making a locked state when protruded laterally out of a vertical surface portion of the support pillar (4); and
a stopper (5) for maintaining the locked state of the movable protrusion (43),
**characterized in that**
the movable protrusion (43) is supported pivotably on a horizontal shaft (43a) which is provided horizontally in the support pillar (4), for pivoting movement by an elastic force from a first elastic member (43b) to protrude laterally out of the vertical surface portion of the support pillar (4).

2. The container-securing device (1) according to Claim 1, wherein the movable protrusion (43) is formed with a cutout (43c) at a location away from the horizontal shaft (43a); the stopper (5) has a moving member (51) for moving in a direction parallel to the horizontal shaft (43a); the moving member (51) comes into contact with the movable protrusion (43) to stop pivoting movement of the movable protrusion (43) when moved to a first position, and when moved to a second position, comes in alignment with the cutout (43c) to allow pivoting movement of the movable protrusion (43).

3. The container-securing device (1) according to Claim 2, further comprising: a second elastic member (52) for urging the moving member (51) toward the second position; a connecting member (53) connected to the moving member (51); an operation handle (54) connected to the connecting member (53) for moving the moving member (51) to the first position against the urge from the second elastic member (52); and an engager (2a) for retaining the operation handle (54) operated to the first position.

4. The container-securing device (1) according to Claim 3, wherein the engager (2a) is provided in the flange (2).

5. The container-securing device (1) according to one of Claim 1 through Claim 4, wherein the flange (2) is attached onto a cargo bed (500).

6. The container-securing device (1) according to one of Claim 1 through Claim 4, further comprising a second support pillar (3) provided in the flange surface facing away from the surface where the other support pillar (4) is provided; and a second fitting portion (31) provided in the second support pillar (3) for fitting into a groove hole in another corner casting (100a).

## Patentansprüche

1. Behälter-Sicherungsvorrichtung (1), die umfasst:
einen Flansch (2) zum Aufsetzen auf eine Außenseite eines Nut-Lochs in einem Eckbeschlag (101a) eines Behälters (101);
eine Stützsäule (4), die sich an dem Flansch (2) befindet;
einen Passabschnitt (41), der an der Stützsäule (4) zum Einpassen in das Nut-Loch in dem Eckbeschlag (101a) vorhanden ist;
einen beweglichen Vorsprung (43) als Teil des Passabschnitts (41), mit dem ein verriegelter Zustand hergestellt wird, wenn er seitlich von einem vertikalen Flächenabschnitt der Stützsäule (4) nach außen vorsteht; und
einen Anschlag (5), mit dem der verriegelte Zustand des beweglichen Vorsprungs (43) aufrechterhalten wird,
**dadurch gekennzeichnet, dass**
der bewegliche Vorsprung (43) für Schwenkbewegung durch eine elastische Kraft von einem ersten elastischen Element (43b) schwenkbar an einer horizontalen Welle (43a) gelagert ist, die horizontal in der Stützsäule (4) angeordnet ist, um seitlich von dem vertikalen Flächenabschnitt der Stützsäule (4) nach außen vorzustehen.

2. Behälter-Sicherungsvorrichtung (1) nach Anspruch 1, wobei der bewegliche Vorsprung (43) mit einem Ausschnitt (43c) an einer von der horizontalen Welle (43a) entfernten Position versehen ist, der Anschlag (5) ein sich bewegendes Element (51) zum Bewegen in einer Richtung parallel zu der horizontalen Welle (43a) aufweist, das sich bewegende Element (51) in Kontakt mit dem beweglichen Vorsprung (43) kommt und Schwenkbewegung des beweglichen Vorsprungs (43) stoppt, wenn es an eine erste Position bewegt wird, und in Flucht mit dem Ausschnitt (43c) kommt und Schwenkbewegung des beweglichen Vorsprungs (43) zulässt, wenn es an eine zweite Position bewegt wird.

3. Behälter-Sicherungsvorrichtung (1) nach Anspruch 2, die des Weiteren ein zweites elastisches Element (52), mit dem das sich bewegende Element (51) auf die zweite Position zu gedrückt wird, ein Verbindungselement (53), das mit dem sich bewegenden Element (51) verbunden ist, einen Betätigungsgriff (54), der mit dem Verbindungselement (53) verbunden ist, um das sich bewegende Element (51) gegen den Druck von dem zweiten elastischen Element (52) an die erste Position zu bewegen, sowie eine Eingriffseinrichtung (2a) umfasst, mit der der an die erste Position gebrachte Betätigungsgriff (54) gehalten wird.

4. Behälter-Sicherungsvorrichtung (1) nach Anspruch 3, wobei sich die Eingriffseinrichtung (2a) an dem Flansch (2) befindet.

5. Behälter-Sicherungsvorrichtung (1) nach einem der Ansprüche 1 bis 4, wobei der Flansch (2) an einer Ladefläche (500) angebracht ist.

6. Behälter-Sicherungsvorrichtung (1) nach einem der Ansprüche 1 bis 4, die des Weiteren eine zweite Stützsäule (3), die sich an der Fläche des Flansches befindet, die von der Fläche weg gewandt ist, an der sich die andere Stützsäule (4) befindet, sowie einen zweiten Passabschnitt (31) umfasst, der an der zweiten Stützsäule (3) zum Einpassen in ein Nut-Loch in einem anderen Eckbeschlag (100a) vorhanden ist.

## Revendications

1. Dispositif de fixation de conteneurs (1) comprenant :
une bride (2) à placer sur un côté externe d'un trou de rainure dans un moulage de coin (101a) d'un conteneur (101) ;
un pilier de support (4) pourvu dans la bride (2) ;
une portion d'installation (41) pourvue dans le pilier de support (4) pour une installation dans le trou de rainure dans le moulage de coin (101a) ;
une protubérance mobile (43) faisant partie de la portion d'installation (41) pour réaliser un état verrouillé quand elle ressort latéralement d'une portion de surface verticale du pilier de support (4) ; et
un arrêtoir (5) pour maintenir l'état verrouillé de la protubérance mobile (43),
**caractérisé en ce que**
la protubérance mobile (43) est supportée de manière pivotante sur un axe horizontal (43a) qui est pourvu horizontalement dans le pilier de support (4), pour un mouvement pivotant par une force élastique provenant d'un premier élément élastique (43b) pour ressortir latéralement de la portion de surface verticale du pilier de support (4) .

2. Dispositif de fixation de conteneurs (1) selon la revendication 1, dans lequel la protubérance mobile (43) est constituée par une découpe (43c) à une position éloignée de l'axe horizontal (43a) ; l'arrêtoir (5) comporte un élément mobile (51) pour se déplacer dans une direction parallèle à l'axe horizontal (43a) ; l'élément mobile (51) vient en contact avec la protubérance mobile (43) pour arrêter le mouvement pivotant de la protubérance mobile (43) quand il est déplacé dans une première position, et quand il est déplacé dans une deuxième position, s'aligne avec la découpe (43c) pour permettre un mouvement pivotant de la protubérance mobile (43).

3. Dispositif de fixation de conteneurs (1) selon la revendication 2, comprenant en outre : un deuxième élément élastique (52) pour pousser l'élément mobile (51) vers la deuxième position ; un élément de connexion (53) connecté à l'élément mobile (51) ; une manette d'actionnement (54) connectée à l'élément de connexion (53) pour déplacer l'élément mobile (51) dans la première position contre la poussée du deuxième élément élastique (52) ; et un élément d'engagement (2a) pour retenir la manette d'actionnement (54) actionnée dans la première position.

4. Dispositif de fixation de conteneurs (1) selon la revendication 3, dans lequel l'élément d'engagement (2a) est pourvu dans la bride (2).

5. Dispositif de fixation de conteneurs (1) selon l'une des revendications 1 à 4, dans lequel la bride (2) est attachée à une benne (500).

6. Dispositif de fixation de conteneurs (1) selon l'une des revendications 1 à 4, comprenant en outre un deuxième pilier de support (3) pourvu dans la surface de bride opposée à la surface où est pourvu l'autre pilier de support (4) ; et une deuxième portion d'installation (31) pourvue dans le deuxième pilier de support (3) pour une installation dans un trou de rainure dans un autre moulage de coin (100a).
